# EUROPEAN PATENT APPLICATION

(11) **EP 2 770 757 A1**
(43) Date of publication of application: **27.08.2014**
(21) Application number: 12851191.2
(22) Date of filing: 13.09.2012
(51) Int. Cl.: H04W 4/02

(54) **METHOD AND TERMINAL FOR INFORMATION PROCESSING BASED ON RCS-E SYSTEM**

(30) Priority: 24.11.2011 CN 201110378745; 17.02.2012 CN 201210037314
(71) Applicant: ZTE Corporation, Shenzhen, Guangdong 518057 (CN)
(72) Inventor: TANG, Qi, Shenzhen Guangdong 518057 (CN); ZHANG, Jidong, Shenzhen Guangdong 518057 (CN)
(74) Representative: Gervasi, Gemma
(86) International application number: PCT/CN2012/081341
(87) International publication number: WO 2013/075534

(57) **Abstract**

A method and a terminal for processing information based on an enhanced Rich Communication Suite (RCS-e) system are disclosed. The method includes: after logging in the RCS-e system, receiving information identified with a positional geography capability configured or modified by a user, and transmitting the information to a server. With the present invention, it can enable the RCS-e system to achieve a location service and improves the user experience.

## Description

### Technical Field

The present invention relates to the field of communications, and in particular, to a method and a terminal for processing information based on an enhanced Rich Communication Suite (RCS-e) system.

### Background of the Related Art

With the deploynent and development of the IP Multimedia Subsystem (IMS) and 3G network, the mobile Internet technology is applied more and more, more and more distinctive services are excavated, and Rich Communication Suite (RCS) is one of the very distinctive services. Since the intelligent terminal has become more and more popular now, many mainstream operators at home and abroad start to push out services based on the RCS specification, which will enable users of mobile phone clients to use functions, such as instant massager, online video sharing and file transfer and so on, on all devices supported by all network operators. Once enhanced Rich Communication Suite (Rich Communication Suite-e*, which is "RCS-e" for short,) is adopted, it will enable customers to use these enhanced communication service on the mobile network in a more simple and intuitive way. With the RCS-e, the customers will be able to make a call while using the instant messenger, sharing files such as online videos and pictures and so on, without limitation of the networks and devices. The RCS-e will enable users to communicate in a very natural way, as current Global System of Mobile Communication (GSM) voice and text information, and it will also provide simplicity and safety which the customers want to acquire from mobile operator services. The specification does not involve the contents about current mobile Internet users actively checking in a location service, but the service has a very wide and urgent application prospect in the mobile Internet.

### Summary of the Invention

The technical problem to be solved by the present invention is to provide a method and a terminal for processing information based on a RCS-e system, to enable the RCS-e system to achieve a location service.

In order to solve the above technical problem, the present invention provides a method for processing information based on a RCS-e system, comprising:
after logging in the RCS-e system, receiving information identified with a positional geography capability configured or modified by a user, and transmitting the information to a server.

Preferably, the above method further comprises the following features: after receiving information identified with a positional geography capability configured or modified by a user, the method further comprising:
storing the information identified with a positional geography capability.

Preferably, the above method further comprises the following features: after distributing the information to the server, the method further comprising:
receiving positional geography information configured or modified by the user; and
transmitting the positional geography information to the server.

Preferably, the above method further comprises the following features: after distributing the information to the server, the method further comprising:
after receiving an instruction from the user, transmitting a message about inquiring a positional geography capability of a friend to the server; and
after receiving an inquiry result message fed back by the server, if it is determined that the friend has the positional geography capability, transmitting a message about acquiring positional geography information of the friend to the server.

Preferably, the above method further comprises the following feature: after distributing the information to the server, the method further comprising:
after receiving a notification message about a change of the positional geography information of the friend transmitted by the server, updating the positional geography information of the friend.

Preferably, the above method further comprises the following features: after distributing the information to the server, the method further comprising:
after receiving an inquiry capability message, transmitting capability information of the RCS-e system of the user to the server, the capability information of the RCS-e system including positional geography capability information.

In order to solve the above problem, the present invention further provides a terminal, comprising:
a configuration module, configured to receive information identified with a positional geography capability configured or modified by a user after logging in a RCS-e system; and
a transmission module, configured to transmit the information to a server.

Preferably, the above terminal further comprises the following features: the terminal further comprising:
a storage module, configured to store the information identified with a positional geography capability.

Preferably, the above terminal further comprises the following features:
the configuration module is further configured to receive positional geography information configured or modified by the user; and
the transmission module is further configured to transmit the positional geography information to the server.

Preferably, the above terminal further comprises the following features: the terminal further comprising:
an inquiry module, configured to transmit a message about inquiring a positional geography capability of a friend to the server after receiving an instruction from the user; and
an acquisition module, configured to: after receiving an inquiry result message fed back by the server, if it is determined that the friend has the positional geography capability, transmit a message about acquiring positional geography information of the friend to the server.

Preferably, the above terminal further comprises the following features: the terminal further comprising:
an update module, configured to update the positional geography information of the friend after receiving a notification message about a change of the positional geography information of the friend transmitted by the server.

Preferably, the above terminal further comprises the following features:
the transmission module is further configured to transmit capability information of the RCS-e system of the user to the server after receiving an inquiry capability message, the capability information of the RCS-e system including positional geography capability information.

In conclusion, the embodiments of the present invention provide a method and a terminal for processing information based on a RCS-e system, which can enable the RCS-e system to achieve a location service and improve the user experience.

### Brief Description of Drawings

Fig. 1 is a diagram of a terminal according to an embodiment of the present invention; and
Fig. 2 is a flowchart of a method for processing information based on a RCS-e system according to an embodiment of the present invention.

### Preferred Embodiments of the Present Invention

The embodiments of the present invention will be described in detail in conjunction with accompanying drawings hereinafter. It should be illustrated that, in the case of no conflict, the embodiments of this application and the features in the embodiments could be combined randomly with each other.

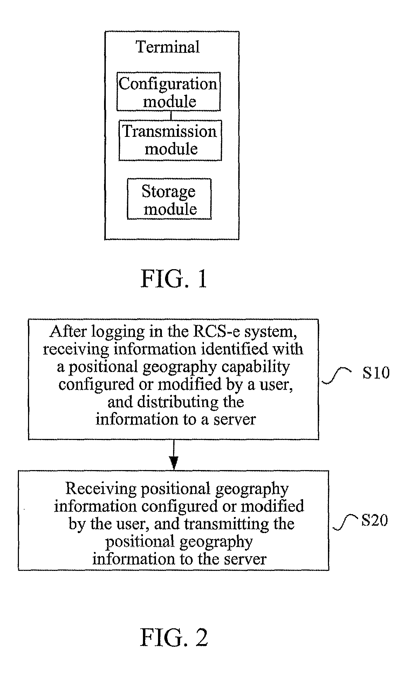

Fig. 1 is a diagram of a terminal according to an embodiment of the present invention. As shown in Fig. 1, the terminal according to the present embodiment comprises:
a configuration module, configured to receive information identified with a positional geography capability configured or modified by a user after logging in a RCS-e system; and
a transmission module, configured to transmit the information to a server.

Wherein, the terminal according to the present embodiment may further comprise:
a storage module, configured to store the information identified with a positional geography capability.

Wherein, the configuration module is further configured to receive positional geography information configured or modified by the user; and
the transmission module is further configured to transmit the positional geography information to the server.

Wherein, the terminal according to the present embodiment may further comprise:
an inquiry module, configured to transmit a message about inquiring a positional geography capability of a friend to the server after receiving an instruction from the user; and
an acquisition module, configured to: after receiving an inquiry result message fed back by the server, if it is determined that the friend has the positional geography capability, transmit a message about acquiring positional geography information of the friend to the server.

Wherein, the terminal according to the present embodiment may further comprise:
an update module, configured to update the positional geography information of the friend after receiving a notification message about a change of the positional geography information of the friend transmitted by the server.

Wherein, the transmission module is further configured to transmit capability information of the RCS-e system of the user to the server after receiving an inquiry capability message, the capability information of the RCS-e system including positional geography capability information.

Fig. 2 is a flowchart of a method for processing information based on a RCS-e system according to an embodiment of the present invention. As shown in Fig. 2, the method according to the present embodiment includes the following steps.

In step S10, after the terminal logs in the RCS-e system, information identified with a positional geography capability configured or modified by a user is received, and the information is transmitted to a server.

Wherein, after the information identified with a positional geography capability configured or modified by a user is received, the information identified with a positional geography capability may further be stored.

The method according to the present embodiment may further comprise the following step.

In step S20, after the positional geography information configured or modified by the user is received by the terminal, the positional geography information is transmitted to the server.

The embodiments of the present invention relates to the implementation of the positional geography information in the RCS-e system. After a user logs in through the RCS-e, the user can acquire the positional geography information of a friend at any time, and the user can also distribute the positional geography information of his/her own to the server if the user wishes, so as to facilitate the friend to see his/her current positional geography information and facilitate the conversation and contact with family, classmates, friends and colleagues.

In the present embodiment, the user can initiate a log-in request to the server, and after the log-in is successful, the user acquires the information of a friend. The user can set a positional geography information distribution will in an interface, and if the user wants to distribute his/her positional geography information to the server and can control the permission, only a certain type of friends or designated users can see his/her positional geography information. After the friend logs in successfully, he/she can acquire the positional geography capability of the user, and if the friend has positional geography capability of the user, the positional geography information of the friend can further be obtained.

The user can configure his/her positional geography information and distribute the positional geography information to the server. The server can distribute a notification message to related friends according to the friend permission and subscription permission configured by the user, and the user and the friend can see the positional geography information of each other according to the capability configured by both parties, so as to provide convenience to his/her life, communication and travel.

The method according to the embodiments of the present invention can solve the requirements that a user wants to acquire positional geography information of related friends in a RCS-e system based service provided by an operator in the field of an IMS network, a 3G network, and a mobile Internet.

In the present embodiment, after a user logs in successfully, the user can configure positional geography capability of his/her own in a related interface of the terminal, and if no positional geography capability is configured, the friend can see that the user has no positional geography capability, and thus the positional geography information of the user can not be obtained. If the positional geography capability is configured, the positional geography capability can be distributed as the service capability which has been provided in the RCS-e system (for example, file transfer, audios and videos, picture sharing, video sharing and Instant Messenger (IM) capabilities).

In the present embodiment, after a user configures the positional geography capability, the user can stores the related capability information locally, so as to facilitate using the related capability information as a default capability when logging in for the next time.

In the present embodiment, after a user configures or modifies his/her positional geography capability, the terminal can transmit (distribute) an OPTION message to distribute his/her RCS-e related capability to the server, and the server forwards the OPTION message to the user's friend. After the friend receives the OPTION message of the capability set sent by the server, the friend obtains the RCS-e related capability of the user, including the positional geography capability of the user. The friend updates all capability set information of the user, and updates the capability set information for display in the interface.

If the user configures that he/she has a positional geography capability, the user can configure or modify the current positional geography information in the related interface of the terminal, i.e., changing his/her positional geography information. If the user configures that he/she does not have a positional geography capability, the user can not modify or distribute his/her positional geography information to the server and the friend also can not acquire the positional geography information of the user.

After a user changes the positional geography information, the terminal can transmit a PUT

Hyper Text Transfer Protocol (HTTP) to transmit new positional geography information to the server. After the server receives a HTTP message of a change of the positional geography information of the user, the server transmits a NOTIFY message to notify the user's friend, and the positional geography information of the user changes. After the friend receives the NOTIFY message, the friend transmits a GET HTTP message to the server to acquire the positional geography information of the user, and the friend updates the newest positional geography information of the user in the interface.

If the user wants to view whether the friend has a positional geography capability, the user can click on a portrait of the friend in the interface, and after the terminal receives an instruction of clicking on the portrait of the friend, the terminal transmits an OPTION message to the server to require inquiring a positional geography capability of the friend; and the server forwards the OPTION message to the user's friend, and after the friend receives the OPTION message of inquiry of the user, the friend transmits the capability set of his/her own to the user inquiring the capability set of his/her own by using the OPTION message, wherein, the capability set includes the positional geography capability of the friend. After the interaction of the OPTION message, the user obtains the RCS-e related capability set of the friend, including the positional geography capability.

If the user has the positional geography capability of the friend, the user can further acquire the positional geography information of the friend, and the terminal can acquire the positional geography information of the friend through the GET HTTP message, and updates the positional geography information to a local status bar of the friend, so as to display and update the positional geography information of the friend at any time; and if there is no positional geography capability, the process ends.

In the present embodiment, if the user changes the positional geography capability of his/her own, after the user configures the positional geography capability, the terminal can distribute the new capability set of the user to the server through the OPTION message; and after the server receives the OPTION message about the change of the user capability, the server transmits the NOTIFY message to the user's friend to notify the user's friend that the capability set of the user changes, including the positional geography capability. After the user's friend receives the NOTIFY message, the capability set of the user is updated correspondingly, and if there is no the positional geography capability of the user, the positional geography information of the user needs to be updated to be empty and does not be displayed.

Those of ordinary skill in the art can understand that all or a part of steps in the above method can be implemented by programs instructing related hardware, and the programs can be stored in a computer readable storage medium, such as a read-only memory, disk or disc etc. Alternatively, all or a part of steps in the above embodiments can also be implemented using one or more integrated circuits. Accordingly, various modules/units in the above embodiments can be implemented in a form of hardware or can also be implemented in a form of software functional module. The present invention is not limited to any particular form of a combination of hardware and software.

The above description is only preferred embodiments of the present invention. Of course, the present invention can have a plurality of other embodiments. Without departing from the spirit and substance of the present invention, those skilled in the art can make various corresponding changes and variations according to the present invention, and all these corresponding changes and variations should belong to the protection scope of the appended claims in the present invention.

### Industrial Applicability

The embodiments of the present invention provide a method and a terminal for processing information based on an RCS-e system, which can enable the RCS-e system to achieve a location service and improve the user experience.

## Claims

1. A method for processing information based on an enhanced Rich Communication Suite (RCS-e) system, comprising:
after logging in the RCS-e system, receiving information identified with a positional geography capability configured or modified by a user, and transmitting the information to a server.

2. The method according to claim 1, wherein, after receiving the information identified with a positional geography capability configured or modified by a user, the method further comprises:
storing the information identified with a positional geography capability.

3. The method according to claim 1, wherein, after transmitting the information to the server, the method further comprises:
receiving positional geography information configured or modified by the user; and
transmitting the positional geography information to the server.

4. The method according to any one of claims 1-3, wherein, after transmitting the information to the server, the method further comprises:
after receiving an instruction from the user, transmitting a message about inquiring a positional geography capability of a friend to the server; and
after receiving an inquiry result message fed back by the server, if determining that the friend has the positional geography capability, transmitting a message about acquiring positional geography information of the friend to the server.

5. The method according to any one of claims 1-3, wherein, after transmitting the information to the server, the method further comprises:
after receiving a notification message about a change of positional geography information of a friend transmitted by the server, updating the positional geography information of the friend.

6. The method according to any one of claims 1-3, wherein, after transmitting the information to the server, the method further comprises:
after receiving an inquiry capability message, transmitting capability information of the RCS-e system of the user to the server, the capability information of the RCS-e system comprising positional geography capability information.

7. A terminal, comprising:
a configuration module, configured to receive information identified with a positional geography capability configured or modified by a user after logging in a RCS-e system; and
a transmission module, configured to transmit the information to a server.

8. The terminal according to claim 7, further comprising:
a storage module, configured to store the information identified with a positional geography capability.

9. The terminal according to claim 7, wherein,
the configuration module is further configured to receive positional geography information configured or modified by the user; and
the transmission module is further configured to transmit the positional geography information to the server.

10. The terminal according to any one of claims 7-9, further comprising:
an inquiry module, configured to transmit a message about inquiring a positional geography capability of a friend to the server after receiving an instruction from the user; and
an acquisition module, configured to: after receiving an inquiry result message fed back by the server, if determining that the friend has the positional geography capability, transmit a message about acquiring positional geography information of the friend to the server.

11. The terminal according to any one of claims 7-9, further comprising:
an update module, configured to update positional geography information of a friend after receiving a notification message about a change of the positional geography information of the friend transmitted by the server.

12. The terminal according to any one of claims 7-9, wherein,
the transmission module is further configured to transmit capability information of the RCS-e system of the user to the server after receiving an inquiry capability message, the capability information of the RCS-e system comprising positional geography capability information.
